# EUROPÄISCHE PATENTSCHRIFT

(11) **EP 2 459 414 B1**
(45) Veröffentlichungstag und Bekanntmachung des Hinweises auf die Patenterteilung: **26.04.2017**
(21) Anmeldenummer: 10737284.9
(22) Anmeldetag: 20.07.2010
(51) Int. Cl.: B60N 2/015

(54) **FAHRZEUGSITZVORRICHTUNG MIT FIXIERENDEN BEINTEILEN**
VEHICLE SEAT DEVICE HAVING FIXATING LEG PARTS
DISPOSITIF SIÈGE DE VÉHICULE ÉQUIPÉ D'ÉLÉMENTS POUR JAMBES

(30) Priorität: 30.07.2009 EP 09009852
(43) Veröffentlichungstag der Anmeldung: 06.06.2012
(73) Patentinhaber: LIMBIC LIFE AG, 8005 Zürich (CH)
(72) Erfinder: KÜNZLER, Patrik, CH-8004 Zürich (CH)
(74) Vertreter: Kasche, André
(86) Internationale Anmeldenummer: PCT/EP2010/004421
(87) Internationale Veröffentlichungsnummer: WO 2011/012241

(56) Entgegenhaltungen:
- DE-A1-102006 017 723
- DE-U1- 8 634 070
- GB-A- 1 084 644
- US-A1- 2004 012 239
- US-B1- 6 550 858

## Beschreibung

Die Erfindung betrifft ein einer Silzvorrichtung zuordenbares formstabiles Beinteil, das jeweils einem linken oder rechten Oberschenkel einer Person vom Knie bis zur Hüfte und an die Oberschenkelform eng anliegend zugeordnet ist, bei dem das Beinteil an der Hüfte aussenseitig, an dem Oberschenkel wenigstens am distalen Ende unterseitig und an dem Knie wenigstens innen- und aussenseitig flächig anliegt. Weiterhin ist die Erfindung auf Sitzvorrichtungen, insbesondere Fahrzeugsitzvorrichtungen und Fahrzeugsitzextraktionssysteme mit diesen Beinteilen gerichtet.

Zusätzlich betrifft die Erfindung eine Sitzvorrichtung, vorzugsweise eine Fahrzeugsitzvorrichtung oder Fahrzeugsitzextraktionssystem mit einer U-förmigen Stützvorrichtung für den Rücken unterhalb der Schulter mit Seitenhalt für den Brustkasten, die lediglich den Rücken und Brustkasten anliegend umschliesst.

### Stand der Technik

Sitzschalen mit Oberschenkelaufnahmen, die an den Seiten bis zum Knie reichen für Patienten mit Haltungsdefiziten sind zum Beispiel aus GB 1,084,644 bekannt. Sitzvorrichtungen mit Teilsitzen zum Lagern einer sitzenden Person sind bekannt. Die Person kann auf den beiden Teilsitzen Platz nehmen, wobei die Teilsitze die Personen unabhängig voneinander unterstützen können. Die WO 93/19648 und die WO 99/16335 betreffen aktiv-dynamische zweiteilige Sitzvorrichtungen, wobei jede Sitzhälfte unabhängig von der anderen beweglich gelagert ist, um den Komfort der sitzenden Person zu verbessern. Auch die WO 2009/070468 und die WO 2009/042688 offenbaren Sitzvorrichtungen mit unabhängig voneinander gelagerten Teilsitzen, wobei getrennt gelagerte und den Oberschenkel von der Hüfte bis zum Knieansatz aufnehmende formstabile Teilsitzelemente zum Einsatz kommen, die eng und formschlüssig an den jeweiligen Oberschenkeln anliegen. All diesen zweiteiligen Sitzvorrichtungen ist gemeinsam, dass der durch die Einzellagerung der Sitz- bzw. Beinhälften zustande kommende Sitzkomfort im Vordergrund steht. Solche komfortabel und sehr beweglich gelagerten geteilten Sitzvorrichtungen sind zwar für den Personentransport durchaus geeignet, nicht jedoch für Fahrzeuge, die den Insassen schnelle Bewegungswechsel und G-Kräfte zumuten. In den Cockpits von Fahrzeugen, die die Insassen mit derart schnellen Bewegungswechseln und G-Kräften belasten, dass die Insassen diese nicht mehr sinnvoll durch eigene Gleichgewichtsverlagerungen ausgleichen können, z.B. bei Luft- und Raumfahrt flugzeugen, insbesondere Kampf- und Kunstflugzeugen sowie entsprechende Hubschrauber, Sport und Rennwagen, Rennbooten, etc., liegt der Entwicklungsschwerpunkt weniger in der komfortablen Federung, sondern mehr in der festen Fixierung der Piloten und etwaiger Beifahrer oder Passagiere. In solchen Cockpits sind die Sitzvorrichtungen der Körperform, insbesondere dem Rücken und den Körperseiten sowie gelegentlich auch der Beinform angepasst und eng anliegend. Weithin bekannt sind die individuell an den Fahrer und Beifahrer angepassten Rennsitze der Firma Recaro mit Ausformungen, die einen starken Seitenhalt vermitteln und die Wirbelsäule ergonomisch stützen. Bei Rennsitzen werden oft die Grundformen den Konturen der Piloten im Sitzen durch Ausschämen mittels spezieller Polymerschäume genau angepasst.

Ausgeschäumte Sitze passen sich dem Fahrer zwar an, bieten dem Körper jedoch zu wenig Spielraum für kleine Anspannungs- und Korrekturbewegungen und eignen sich wegen ihrer meist nicht-glatten Oberfläche nicht als Referenzfläche zur Lage- und Positionsbestimmung des Körpers. Obwohl ausgeschäumte Sitze, wie in Rennwagen üblich, guten Halt bieten, schränken sie demnach die Fahrzeugwahrnehmung durch den Körper als auch Spann- und Balancebewegungen des Körpers, insbesondere um die Wirbelsäule und um den Hüft- und Schulterbereich herum, erheblich ein.

Jedoch ist nicht nur der Seitenhalt und der Schutz der Wirbelsäule wichtig. Fahrer und Beifahrer werden bei Bremsmanövern und Unfällen extremen Belastungen ausgesetzt, die sie nach vorn aus dem Sitz schleudern. Während bei normalen Transportmitteln Zwei- und Dreipunkthaltegurte zum Einsatz kommen, werden in Militär- und Sportfahrzeugen Vier- und Mehrpunkthaltegurte eingesetzt, die in Extremsituationen das "Submarining", d.h. das Untertauchen des Gurts, durch einen weiteren Haltepunkt zwischen den Beinen der sitzenden Person verhindern.

Ein weiteres Problem von Fahrzeugsitzen in "Extremfahrzeugen" ist die ständige bewusste und oft auch unbewusste Gegensteuerung des Pilotenkörpers entgegen der auf ihn einwirkenden Fahrt-, insbesondere Seitenkräfte. Bei diesem Kompensationsverhalten verkeilt der Pilot die Füsse und/oder verdreht die Beine, insbesondere die Knie, zur Kurveninnenseite, oder gegen die Fahrzeugwand, etc. Diese ständige bewusste oder unbewusste Kompensationsbewegung beeinflusst die Konzentration, aber auch das direkte Steuerungsverhalten des Fahrers, der seine verschobene und ggf. zur Kurveninnenseite gewinkelte Sitzposition bei der Steuerung und bei der körperlichen Fahrzeugwahrnehmung berücksichtigen muss und vermindert wegen der starken Muskelkräfte auch die verfügbare Sensibilität der unteren Körperhälfte bei der Ausübung von Steuer- und bei der Wahrnehmung von Fahrzeugimpulsen. Zudem ist die distale Innenseite des Oberschenkels bei heutigen Sitzen als Stütz- und als Wahrnehmungsfläche ungenutzt. Hier liegt in beiden Bereichen grosses Potential, da eine sensible Körperoberfläche, an der Druck emotional positiv wahrgenommen wird, ungenutzt bleibt. Das Dokument US2004/0012239 A1 wird als nächstliegender Stand der Technik betrachtet und es offenbart ein einer Sitzvorrichtung zuordenbares formstabiles Beinteil entsprechend dem Oberbegriff des Anspruchs 1.

Bei "Extremfahrzeugen" werden die Fahrzeuginsassen hauptsächlich durch die sie umgebende Fahrzeugkarosse geschützt, z.B. durch Verstrebungen und ganze Schutzkäfige. Zwar können so direkte Einwirkungen von aussen grösstenteils abgemildert werden, aber die Fahrzeugkarosse bzw. der Schutzkäfig werden dabei häufig so heftig gegen die Insassen geschleudert, dass eine Polsterung um den Fahrzeugsitz erforderlich (Schaumstoffummantelungen für Schutzkäfigen, Airbags, etc.) wird. Auf eine zusätzliche Ausrüstung der Person selbst im Cockpit gegen mechanische Einwirkungen wird ausser ggf. der Polsterung der Kleidung aus Gewichtsgründen verzichtet.

Wenn es erst mal zu einer unfallbedingten Verletzung gekommen ist, müssen die Insassen schnell und ohne Folgeverletzungen aus dem Cockpit befreit werden. Das Entfernen einer verletzten und ggf. bewegungsunfähigen oder bewegungsbeschränkten Person aus den häufig engen Cockpits und den an dem Körper eng anliegenden Sitzen kann sich als problematisch und auch gefährlich erweisen, z.B. wenn es zu Hals- oder Wirbelsäulenverletzungen gekommen ist. Zur Lösung dieses Problems wurden auf der Motorsports Engineering Conference & Exposition in Dearborn, Michigan am 13. bis 16. November einige Entwicklungskonzepte für extrahierbare Sicherheitssitzsysteme für F1 Cockpits vorgestellt und in dem Dokument SAE Technical Paper Series 2000-01-3540 beschrieben. Bei einem dieser Konzepte wird dem verletzten Fahrer noch im Cockpit eine westenartige Vorrichtung um den Thorax geschnallt und ggf. mit einer Halsstütze kombiniert (KED System, "Kendrick Extraction device"), wobei allerdings beim Extrahieren ein Druck auf den Brusstkorb ausgeübt wird, der die Atmung behindern kann. Als Alternative wird das "Lear Seat Shell Design" vorgestellt, bei dem der Fahrer in einer einteiligen an die fahrende Körperhaltung angepasste Sitzschale, die vom Oberschenkel bis zu den Schultern reicht, Platz nimmt und im Verletzungsfall die Sitzschale mit daran gegurtetem Fahrer gemeinsam aus dem Cockpit entfernt wird. Als weitere und zukünftige Entwicklung wird das "Lear F1 Collapsible Seat Concept" beschrieben, ein Sitz aus Sitzelementen, die jeweils einzelnen Körperteilen des Fahrers zugeordnet sind und so gelenkig miteinander verbunden sind, dass der Sitz nach dem Entfernen zusammen mit dem verletzten Fahrer mittels der Gelenke an den Sitzelementen zur Bildung einer Liege gestreckt werden kann und so den liegenden Weitertransport oder die Akutbehandlung des Verletzten gestattet. Dieses Sitzextraktionssystem besteht aus gelenkig verbundenen Segementen zur Stützung der Unterschenkel, der Oberschenkel, des Beckens, der Hüfte, des Brustkorbs und des Kopfes, wobei alle Segmente jeweils schalenförmig die Rückseite und die Körperseite des anliegenden Körperteils des Fahrers zur Vermittlung von Seitenhalt umschliessen.

Aufgabe der Erfindung ist es, eine verbesserte Fahrzeugsitzvorrichtung und vorteilhafte Komponenten dafür zur Verfügung zu stellen, die besonders für Fahrzeuge geeignet ist, bei den extreme Kräfte auf die sitzende Person einwirken. Insbesondere soll die Sitzvorrichtung das Problem des Submarinings bei einem Frontalzusammenstoss oder starkem Bremsen vermeiden, das Kompensationsverhalten der sitzenden Personen bei starken Seitenkräften wie bei Kurvenfahrten/-flügen verringern, Schutz gegen mechanische Einwirkungen von aussen vermitteln und/oder die Verletzungsgefahr bei der Notfallevakuierung von Personen aus dem Fahrzeugsitz verringern.

Diese und weitere Aufgaben werden mit einem einer Sitzvorrichtung, zuordenbaren formstabilen Beinteil gelöst, das jeweils einem linken oder rechten Oberschenkel einer Person vom Knie bis zur Hüfte und an die Oberschenkelform eng anliegend zugeordnet ist, bei dem das Beinteil an der Hüfte aussenseitig, an dem Oberschenkel wenigstens am distalen Ende unterseitig und an dem Knie wenigstens innen- und aussenseitig flächig anliegt, dadurch gekennzeichnet, dass das Beinteil mit der Person derart verbunden ist, dass das Beinteil von der Person im von der Sitzvorrichtung gelösten Zustand als Bekleidungsstück getragen werden kann.

Die erfindungsgemässen Beinteile sind formstabil, d.h. sie sind im Wesentlichen formbeständig und in einigen Ausführungsformen sogar starr. Vorzugsweise sind sie nur bei mittlerer bis starker Krafteinwirkung beschränkt und vorzugsweise auch elastisch deformierbar. In einer bevorzugten Ausführungsform kann die tragende Person die Form des Beinteils mit eigener Kraft nur gering und zudem elastisch verändern. Das Beinteil hat dementsprechend eine hohe Biegesteifigkeit. Die Formstabilität geht mit mechanischer Festigkeit einher, die den Oberschenkel, das Knie und die Hüfte vor mechanischer Einwirkung schützt. In fester Verbindung mit weiteren Elementen einer erfindungsgemässen Sitzvorrichtung, wie einer Sitzfläche und/oder einem Rückenteil, wird auch die Wirbelsäule geschützt, indem eine schädliche Auslenkung der Hüfte relativ zur Wirbelsäule verhindert oder verringert wird.

Das Beinteil kann wie ein Bekleidungsstück "angezogen" und im und ausserhalb des Fahrzeugs "getragen" werden kann, z.B. wie ein Skischuh. Die Fixierung kann dabei allein durch die Form und Steifigkeit des Beinteils oder durch die Form in Kombination mit Haltelementen, z.B. Haltegurten, Klettverschlüssen oder Gestaltung des Beinteils als Teil einer Hose zustande kommen. Demzufolge sind bevorzugte Beinteile mit der in ihnen sitzenden Person derart verbunden sind, dass diese von der Person im vom Fahrzeugsitz gelösten Zustand als Bekleidungsstück getragen werden können. Dies hat den Vorteil, dass die form- und vorzugsweise passgenauen Beinteile bequem sind, sehr guten Halt bieten und dass sie gegebenenfalls ausserhalb des Fahrzeuges an- und ausgezogen werden können. Dies ist insbesondere von Vorteil, da der Vorgang des Eingehens und des Lösens der physischen Verbindung zum Fahrzeug je nach Verbindungsart äusserst schnell vonstatten gehen kann, während der Vorgang des sich Bekleidens präzise, bequem und ohne Zeitdruck vorgenommen werden kann.

Vorteilhaft weisen die Beinteile zum Zweck der Zuordnung zu einer Sitzvorrichtung wenigstens eine Arretiervorrichtung seitlich und/oder unterseitig an dem proximalen Ende (Hüfte) sowie optional seitlich und/oder unterseitig entlang des Oberschenkels bis zum Knie zur möglichst einfachen und schnellen fixier- und wieder lösbaren Verbindung mit einer Sitzvorrichtung und/oder einer Fahrgastzelle auf. Besonders bevorzugt werden die Beinteile aussenseitig und proximal einer Sitzplatte des Fahrzeugsitzes arretierbar zugeordnet.

Die Begriffe "zuordnen", "Zuordnung", "zuordenbar" und Ähnliche sind so zu verstehen, dass zwei Objekte räumlich miteinander in Verbindung gebracht werden, beispielsweise fest und ggf. wieder lösbar verbunden werden, wobei die Zuordnung je nach mechanischer Ausgestaltung der Verbindung räumlich starr oder in eine oder mehrere Raumrichtungen beweglich gestaltet sein kann. Beispielsweise kann die Zuordnung der Beinteile zu anderen Komponenten einer Sitzvorrichtung direkt an diesen Komponenten oder indirekt z.B. über Komponenten einer Fahrgastzelle bewerkstelligt werden. Die Zuordnung und damit z.B. der Winkel zwischen den Beinteilen und einer Sitzfläche, einer Sitzfläche und einem Rückenteil, einem Rückenteil und einer Hals- oder Kopfstütze können beispielsweise verstellbar gestaltet sein und so an die Bedürfnisse der jeweiligen sitzenden Person angepasst werden. Die Verbindung(en) der Beinteile mit anderen Bestandteilen des Fahrzeugsitzes und/oder der Fahrgastzelle kann starr sein und diese fixieren oder sie kann begrenzt flexibel und ggf. auch elastisch dämpfend, z.B. vibrationsdämpfend ausgestaltet sein. Die vibrationsdämpfende Verbindung(en) kann dann Polsterelemente ersetzen oder unterstützen. Eine beschränkte Auslenkung der verbundenen Beinteile, vorzugsweise seitwärts, optional in Verbindung mit einer Drehbeweglichkeit der Oberschenkel, kann den Komfort der sitzenden Person und die Ausrichtung gegen die Fliehkräfte erleichtern. Jedoch hat sich in ersten Versuchen gezeigt, dass eine möglichst starre Fixierung der Beinteile der Fahrzeugwahrnehmung förderlich ist. Zudem führt eine möglichst starre Fixierung der Beinteile dazu, dass der Fahrer selbst bei starken seitlichen Fliehkräften entspannter bleibt und sich besser auf die Steuerung konzentrieren kann. Dies hat auch physiologische Vorteile, da die sensorische Wahrnehmung und die feinmotorische Leistungsfähigkeit der Beine durch die muskuläre Entlastung gesteigert wird.

Vorteilhaft sind die Beinteile innenseitig gar nicht oder nur gering gepolstert, vorzugsweise nur an einer oder mehreren der folgenden Positionen: zum Knie innen- und/oder aussenseitig und/oder aussenseitig an der Hüfte. In einer bevorzugten Ausführungsform sind die Innenseiten der Beinteile glatt, da so eine bessere Sensorik für das Fahrzeugverhalten an den Fahrer vermittelt werden kann.

In einer bevorzugten Ausführungsform sind die Beinteile aussenseitig mit schockabsorbierenden, vorzugsweise elastischen Dämpfungselementen, z.B. Gummipolstern, vor Krafteinwirkungen geschützt Vorteilhaft und gewichtssparend sind diese Elemente wenigstens an den proximalen und distalen Enden angebracht, d.h. nur im Bereich des Knies und der Hüfte.

Die Form der Beinteile folgt der Kontur des Oberschenkels anliegend, vorzugsweise eng anliegend und verringert so wesentlich die Auslenkung oder ein Rutschen des Oberschenkels in dem Beinteil. Der Begriff anliegend und insbesondere eng anliegend findet dort seine Grenzen, wo der Druck auf den Oberschenkel, das Knie oder die Hüfte als unangenehm empfunden wird. Die Zuordnung von Oberschenkel zum Beinteil, d.h. die Verbindung beider, erfolgt durch die anliegende, vorzugsweise eng anliegende Passform, vorzugsweise in Verbindung mit Betestigungsmitteln wie Klettverbindungen im Beinteil und an der Beinbekleidung, Haltegurten, Schnappverschlüssen, etc.

Da die Beinteile am Oberschenkel anliegen, vorzugsweise eng, und Piloten, Beisitzer und Passagiere von Extremfahrzeugen meist wärmende Schutzbekleidung tragen, z.B. einen feuerhemmenden Anzug, ist das Beinteil (wie ein "Beinkleid") vorteilhaft wenig stens teilweise luftdurchlässig, vorzugsweise gelocht und ggf. mit diffusionsoffenen Materialien überzogen.

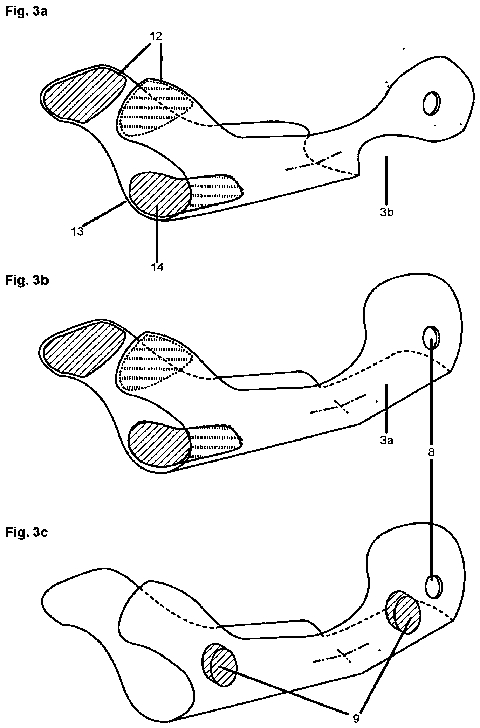

Die erfindungsgemässen Beinteile liegen jeweils an der Hüfte der Person aussenseitig, dem jeweiligen Oberschenkel wenigstens am distalen Ende unterseitig und an dem jeweiligen Knie wenigstens innen- und aussenseitig flächig an. Das Beinteil kann, ist aber keineswegs notwendigerweise unterseitig bis unter die Hüfte als Sitzfläche ausgeführt. Vorteilhaft ist an den beiden Beinteilen das Gesäss der tragenden Person, also die Sitzfläche ausgespart und wird in der Fahrzeugsitzvorrichtung durch ein weiteres Element, z.B. ein Sitzpolster bereitgestellt. So können die Beinteile ausserhalb des Fahrzeugs komfortabler mit mehr Geh- und Stehkomfort getragen werden. Figur 3a zeigt eine solche Ausführungsform ohne Sitzfläche und die Figuren 3b und 3c zwei Ausführungsformen mit integrierter Sitzfläche, die dann vorzugsweise gepolstert ausgestaltet sein kann. In Ausführungsbeispielen kann die Sitzfläche selbst ein Teil der Beinteile sein, die aber im Gegensatz zu diesen aus einem flexiblen Material optional mit Dämpfungs-/Polsterwirkung konstruiert sein kann.

Die Beinteile sind vorzugsweise nach oben offen, um die Aufnahme des Oberschenkels zu erleichtern. Vorteilhaft ist wenigstens der distale Teil um das Knie herum nach unten offen, um die Kniekehle frei zu legen. Dies fördert die Durchblutung und beugt Durchblutungsstörungen, z.B. Krampfadern vor. Vorzugsweise liegen die Beinteile am Knie oberseitig wenigstens teilweise oder vollständig an. Im letzteren Fall muss die tragende Person in das Beinteil einschlüpfen. Wenn das Beinteil nicht nur seitlich am Knie anliegt, sondern auch noch an der Oberseite davon wenigstens teilweise anliegt, verhindert dies effektiv ein nach vorne Durchrutschen der sitzenden Person bei Krafteinwirkung von vorn. Da der Beindurchmesser vom Knie zur Hüfte hin zunimmt und sich der Oberschenkel beim nach vorne Rutschen im Kniebereich des Beinteil festkeilt, wird ein Durchrutschen ("Submarining") vermieden oder wenigstens stark verlangsamt. Vorteilhaft wird der Kniebereich mittels eines flexiblen Haltesystems wie mit einem Gurt oder Klettverschluss oder einer starren oder flexiblen Schnalle (z.B. wie bei Skischuhen) nach oben geschlossen.

In einer bevorzugten Ausführungsform ist wenigstens ein Beinteil am distalen Ende, vorzugsweise am Knie, mit Sensoren ausgestattet ist, vorzugsweise innenseitig, aussenseitig und/oder unterseitig. Stattdessen oder zusätzlich können die Beinteile mit Informationsvorrichtungen versehen sein. Sensoren können z.B. die Temperatur, den Blutdruck, den Puls, den Druck des Beins, des Knies und/oder der Hüfte gegen das Beinteil messen und weiterleiten, während Informationsvorrichtungen z.B. durch Wärme oder Drucksequenzen der sitzenden Person Informationen mitteilen können, wie z.B. die Betriebstemperatur von Fahrzeugaggregaten wie Motor, Düse oder Bremse oder die Bodenhaftung bzw. die Bodenbeschaffenheit.

Die Beinteile können unabhängig voneinander einer Sitzvorrichtung zugeordnet werden. Vorzugsweise sind erfindungsgemässe linke und rechte Beinteile in Sitzvorrichtungen gelenkig oder wenigstens flexibel miteinanander verbunden, vorzugsweise wenigstens am proximalen Ende (Hüfte). Die Verbindung kann direkt z.B. über eine Sitzplatte oder eine Rückenstütze oder indirekt über Komponenten der Fahrzeugkabine erfolgen.

Die Beinteile sind vorzugsweise einteilig, d.h. die aussenseitig an die Hüfte, unterseitig an den Oberschenkel und an das Knie innen- und aussenseitig anliegenden, vorzugsweise eng anliegenden, formstabilen Beinteile sind aus einem Teil gefertigt, z.B. aus Kunststoffen, wahlweise mit Fiber- Kevlar oder Carbonfaserelementen. Wenn die Beinteile aus mehreren Komponenten bestehen sollen, dass müssen sie so formstabil miteinander verbunden werden, dass sie letztendlich wie ein Teil auf die drei oben genannten Punkte einwirken und dem Oberschenkel somit als eine Art formstabiles Teilaussenskelett dienen. Die Beinteile können z.B. auf der unteren Seite in Längsrichtung beweglich oder sogar zerlegbar getrennt sein, z.B. mittels eines zu öffnenden Scharniers. Allerdings sollten die Beinteile im geschlossenen/"angezogenen" Zustand - wenn in Verbindung mit einem Sitzsystem - formstabil sein und als formstabiles Ganzes auf mechanische Belastungen reagieren. Dementsprechend sollten die Verbindungen mehrteiliger Beinteile im Wesentlich starr oder nur sehr beschränkt flexibel sein. Wenn nicht in Verbindung mit dem Sitzsystem können die starren oder sehr beschränkt flexibel gestalteten Verbindungen mehrteiliger Beinteile zur Verbesserung des Tragekomfort, z.B. beim Gehen, An- oder Ausziehen gelockert oder sogar geöffnet werden.

In einem weiteren Aspekt betrifft die Erfindung eine Fahrzeugsitzvorrichtung zum Lagern einer sitzenden Person mit linken und rechten erfindungsgemässen Beinteilen.

In einer bevorzugten Ausführungsform sind die Beinteile der Fahrzeugsitzvorrichtung derart zugeordnet sind, dass der Oberschenkel der sitzenden Person relativ zur Horizontalen wenigstens einen Winkel von 10 bis 60, vorzugsweise 20 bis 40, mehr bevorzugt von 25 bis 35, am meisten bevorzugt von etwa 30 Grad aufweist. Unter Winkel ist hier der Winkel zwischen dem Oberschenkelknochen und der Horizontalen gemeint. Vorzugsweise ist der Winkel einstellbar.

Fahrzeugsitze mit derart zur Horizontalen gewinkelten Beinteilen fangen bei einer starken Bremswirkung oder einem Frontalaufprall die Hüfte und den Körper der sitzenden Person ab und verhindern somit ein Untertauchen ("Submarining") oder schwächen dieses ab. Zwar kann der Körper im Rahmen der Toleranz von z.B. Haltegurten ein wenig nach vorn rutschen, wird aber dann von der Schrägstellung gegen die Kraftrichtung der Beinteile abgebremst. Vorteilhaft umschliessen die Beinteile daher die Knie vollständig, z.B. durch die Formgebung oder durch zusätzliche Haltesysteme wie Gurte und Schnappverschlüsse.

Die Sitzvorrichtung umfasst vorzugsweise im Wesentlichen die Beinteile und die Verbindung, z.B. Arretierung in der Fahrzeugzelle oder an anderen Komponenten des Fahrzeugsitzes, die eine vorzugsweise angewinkelte Beinposition der sitzenden Person gewährleistet. In der einfachsten Ausführungsform besteht die Sitzvorrichtung aus den zwei getrennten formstabilen Beinteilen und einer Arretierung in der Fahrgastzelle. Die Person kann auf dem Zellenboden, einer Sitzfläche oder auf den Beinteilen selbst (mit Sitzfläche) sitzen. Vorzugsweise aber umfasst die Sitzvorrichtung auch eine Rückenstütze und/oder eine Kopfstütze. Die Rückenstütze ist vorzugsweise so ausgestaltet, dass sie einen starken Seitenhalt an Taille und/oder am Brustkorb vermittelt. Ganz besonders bevorzugt liegt die Rückenstütze ausser am Rücken lediglich seitlich am Brustkorb unterhalb der Schultergelenke an. Am meisten bevorzugt liegt sie am Rücken und seitlich ausschliesslich unterhalb der Schultergelenke im Thoraxbereich an, d.h. sie liegt nicht unter dem Brustkorb.

In einer bevorzugten Ausführungsform sind die Beinteile aussenseitig und proximal einer Fahrzeugkabine und/oder einer Sitzplatte des Fahrzeugsitzes arretierbar zugeordnet. Zusätzlich umfasst die Sitzvorrichtung vorzugsweise wenigstens eine Sitzfläche, eine Rückenstütze, eine Hüftstütze und/oder eine Kopfstütze umfasst.

Vorzugsweise sind die Beinteile der Fahrzeugsitzvorrichtung und/oder einer Fahrzeugkabine so beweglich zugeordnet, dass vorzugsweise wenigstens eine beschränkte Seitwärtsauslenkung der Knie möglich ist. Dies trägt zum Komfort, nicht aber zu optimalen Fahrzeugsensorik durch die sitzende Person bei.

Auch bevorzugt ist, dass die Beinteile wenigstens teilweise elastisch dämpfend dem Fahrzeugsitz und/oder der Fahrzeugkabine zugeordnet sind.

Bei weiteren Ausführungsbeispielen der Sitzvorrichtung ist vorgesehen, dass die Beinteile vorzugsweise mittels einer Notlösevorrichtung einfach und schnell zu lösen sind. So kann der Fahrzeuginsasse, z.B. ein Rennfahrer oder Kampfpilot, das Fahrzeug mit den Beinteilen "bekleidet" verlassen. Dies kann zu Fuss, mit Hilfe Dritter oder per Schleudersitz vonstatten gehen. Bei vielen Unfällen von "Extremfahrzeugen" sind die Insassen mehr oder minder schwer verletzt und dürfen nur sehr behutsam entfernt werden, um keine starken Schmerzen oder Folgeschäden (Hals- und Wirbelsäulenverletzungen) zu vermeiden.

In einer bevorzugten Ausführungsform sind daher bei der erfindungsgemässen Sitzvorrichtung die Beinteile einem oder mehreren anderen Teilen der Sitzvorrichtung, vorzugsweise einen Sitzteil und/oder einem Rückenteil so zugeordnet oder können so zugeordnet werden können, dass diese Teile den Körper der sitzenden Person auch nach dem Lösen vom Fahrzeug stützen. Mit anderen Worten, die Sitzkomponenten können nach dem Lösen von der Fahrgastzelle als Tragekomponenten verwendet werden. Vorteilhaft ist in diesem Zusammenhang, wenn Haltesysteme wie Sicherheitsgurte an der Sitzvorrichtung nach dem Lösen von der Fahrgastzelle verbleiben und so die verletzte Person daran fixieren. Die erfindungsgemässe Sitzvorrichtung kann somit die Bergung von Insassen erheblich erleichtern und sicherer machen.

In einem weiteren Aspekt ist daher die Erfindung auf ein Fahrzeugsitzextraktionssystem bestehend aus einer erfindungsgemässen Fahrzeugsitzvorrichtung und einer Extraktionsvorrichtung gerichtet, bei dem die Fahrzeugsitzvorrichtung Aufnahmepunkte für die Extraktionsvorrichtung aufweist, mit der wenigstens Teile der Sitzvorrichtung gemeinsam und vorzugsweise in räumlich fixierter Zuordnung zueinander aus der Fahrzeugkabine geborgen werden können.

Da die Schulter locker, d.h. nicht durch ein fixierendes Gelenk, mit dem Thorax verbunden ist, ist es nicht notwendig, die Schulter lateral abzustützen, um Fliehkräften in "Extremfahrzeugen" entgegenzuwirken. Herkömmliche Fahrzeugsitze schränken üblicher Weise die Bewegungsfreiheit im Schultergelenk und die der Arme ein.

Zudem wird unabhängig von den erfindungsgemässen Beinteilen auch eine Sitzvorrichtung, vorzugsweise Fahrzeugsitzvorrichtung oder ein Fahrzeugsitzextraktionssystem mit einer vorzugsweise U-förmigen Stützvorrichtung für den Rücken unterhalb der Schulter mit Seitenhalt für den Brustkasten offenbart, die lediglich den Rücken und Brustkasten anliegend umschliesst.

Diese Sitzvorrichtung mit der U-förmigen Stützvorrichtung für den Rücken unterhalb der Schulter mit Seitenhalt für den Brustkasten kann die erfindungsgemässen Beinteile aufweisen und beinhaltet optional auch die für Sitzvorrichtungen mit erfindungsgemässen Beinteilen oben beschriebenen Merkmalsvarianten.

Durch seine lediglich am Rücken und den Thoraxseiten anliegende Form eignet sich das Rückenteil besonders zum Abstützen des Oberkörpers gegen Seitenkräfte, da die am Thorax anliegende Fläche im Vergleich zu herkömmlichen Sitzen signifikant grösser ist. Ein weiterer Vorteil ist, dass diese Konstruktion im Gegensatz zu herkömmlichen Sitzen nicht Weichteile, sondern direkt das Skelett stützt. Da das Rückenteil am Thorax anliegt, ist es optimal zur Ausstattung mit Sensoren, z.B. zur Messung der Herzaktivität, geeignet. Zudem sind die Schultern und die Hüfte frei beweglich und luftgekühlt.

Weitere Vorteile, Merkmale und Einzelheiten ergeben sich aus der nachfolgenden Beschreibung der Zeichnungen, in denen einzelne beispielhafte Ausführungsbeispiele im Detail beschrieben werden. Beschriebene und/oder bildlich dargestellte Merkmale bilden für sich oder in beliebiger sinnvoller Kombination den Gegenstand der Erfindung, gegebenenfalls auch unabhängig von den Ansprüchen, und können insbesondere zusätzlich auch Gegenstand einer oder mehrerer separaten Erfindung/en sein. Gleiche, ähnliche und/oder funktionsgleiche Teile sind mit gleichen Bezugszeichen versehen.

Es zeigen:
- Figur 1a: eine Seitenansicht einer erfindungsgemässen Sitzvorrichtung mit Beinteil, Sitzfläche, Rücken- und Kopfstütze;
- Figur 1b: eine Seitenansicht einer erfindungsgemässen Sitzvorrichtung wie in Figur 1a mit einer Aussparung am Gesäss und Rückenstütze;
- Figur 2a: eine Seitenansicht eines erfindungsgemässen Beinteils mit Aussparung am Gesäss eingesetzt in eine seitliche Aufnahme mit offenem Arretierungshebel und Sicherungshebel;
- Figur 2b: eine Seitenansicht des erfindungsgemässen Beinteils von Figur 2a mit geschlossenem Arretierungshebel;
- Figur 3a: eine dreidimensionale Vorderseitenansicht eines erfindungsgemässen Beinteils mit Aussparung am Gesäss, Aussparung an der Kniekehle und Polsterung beidseitig seitlich am Knie und unten hinter der Kniekehle;
- Figur 3b: eine dreidimensionale Vorderseitenansicht eines erfindungsgemässen Beinteils wie in Figur 3a jedoch mit einer integrierten Sitzfläche, wobei die Sitzfläche und die am unteren Oberschenkel aufliegende Fläche vorzugsweise einen geringen Winkel, vorzugsweise von 140 bis 170, mehr bevorzugt 160 bis 170 Grad zueinander bilden;
- Figur 3c: eine dreidimensionale Vorderseitenansicht eines erfindungsgemässen Beinteils wie in Figur 3b jedoch ohne Polsterung innen, aber mit aussenseitigen distalen und proximalen schockabsorbierenden Elementen.
- Figur 4a: eine Ansicht einer erfindungsgemässen Rückenstütze von oben mit rückenseitiger Fläche, linker- und rechter Stützfläche sowie hinterem (401), linkem (402) und rechtem (403) Polster sowie Verbindungselementen zum Fahrzeug.
- Figur 4b: eine Vorderansicht eines erfindungsgemässen Rückenstütze mit rückenseitiger Fläche, linker- und rechter Stützfläche sowie hinterem, linkem und rechtem Polster, sowie einem oberen und unteren Fortsatz sowie einer trapezförmigen Taillierung.
- Figur 4c: eine Seitenansicht einer erfindungsgemässen Rückenstütze mit abgwinkelter Seitenfläche.
- Figur 4d: eine Vorderansicht einer erfindungsgemässen Rückenstütze mit Verbindungselement zu den beiden Beinteilen.
- Figur 4e: eine Seitenansicht einer erfindungsgemässen Rückenstütze von Figur 4d.
- Figur 4f: eine Vorderansicht eines Verbindungselements für die der beiden Beinteile.
- Figur 4g: eine Seitenansicht eines Verbindungselements für die der beiden Beinteile.
- Figur 5a/b: zwei Seitenansichten eines erfindungsgemässen Fahrzeugsitzextraktionssystems;
- Figuren 6a/b/c drei 3-D: Ansichten eines erfindungsgemässen Fahrzeugsitzextraktionssystems ohne (6a/b) und mit Extraktionsrahmen (6c).

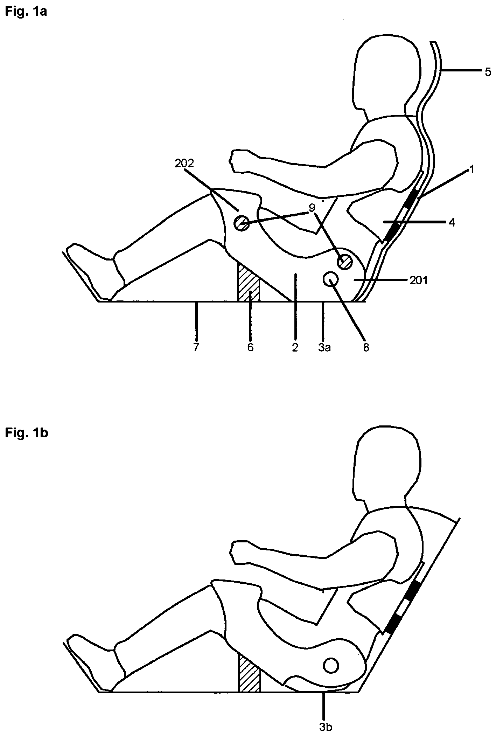

In einer beispielhaften Sitzvorrichtung der Erfindung zeigt Figur 1a eine Sitzvorrichtung (1) mit Beinteil (2), Sitzfläche (3a), Rücken- (4) und Kopfstütze (5), bei der das Beinteil (2) proximal (201) (an der Hüfte) mit dem Boden der Fahrgastzelle (7) verbunden ist und distal (202) mit einer vibrationsdämpfenden Elastikstütze (6) versehen ist. Der Sitz ist mit einer proximalen Sitzarretierung (8) an dem Kabinenboden (7) und zwei seitlichen proximalen und distalen schockabsorbierenden Elementen (9) versehen, die einen Seitenaufprall mindern. Die Beinteile (2) können in bevorzugten Ausführungsformen der Erfindung auf der Elastikstütze (6) frei aufliegen oder dieser fixierend durch eine starre oder elastische Verbindung zugeordnet sein. Vorzugsweise ist die Verbindung elastisch und gestattet eine Rotation/Drehung um die Schenkellängsachse. Jedoch sollten die Beinteile dem Sitz oder der Fahrzeugkabine insgesamt so zugeordnet sein, dass eine Lateralbewegung der Beinteile (2) (Seitwärtsauslenkung bei Kurvenfahrten/-flügen) beschränkt oder sogar ausgeschlossen wird, so dass der Fahrer keine Notwendigkeit zu Kompensationsbewegungen hat, um Seitenkräften entgegen zu wirken, und sich stattdessen vollständig auf die Steuerung konzentrieren kann.

In einer zu Figur 1 a weitgehend identischen Figur 1b wird eine bevorzugte Sitzvorrichtung (1) mit einem Beinteil (2) mit einer Aussparung am Gesäss (3b) und einer Rückenstütze (4) gezeigt. Die Aussparung erleichtert das Gehen mit den Beinteilen, ermöglicht ein extrem flaches Sitzen in der Fahrzeugkabine und spart Gewicht.

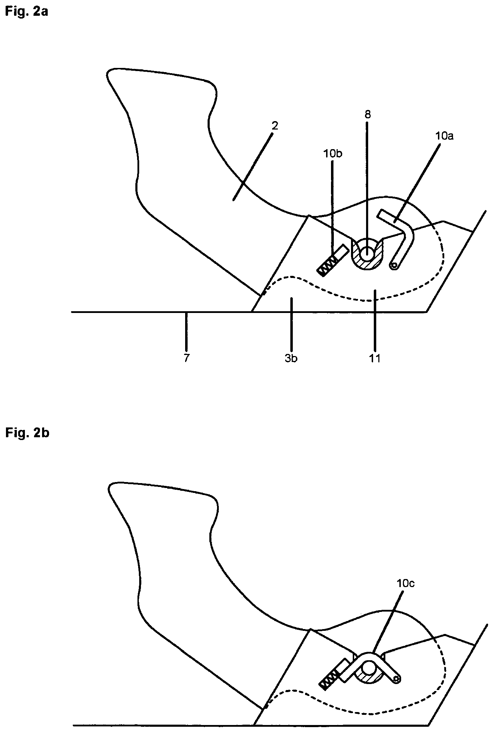

Wie in Figur 2a gezeigt wird, kann ein erfindungsgemässes Beinteil (2) mit Aussparung am Gesäss (3b) in eine seitliche Aufnahme (8) in der Fahrzeugkabine mit offenem Arretierungshebel (10a) und Sicherungshebel (10b) eingesetzt und durch Schliessen des Arretierungshebel (10c) (siehe Fig. 2b) und Vorlegen des Sicherungshebels sicher und beschränkt nach oben und unten beweglich fixiert werden.

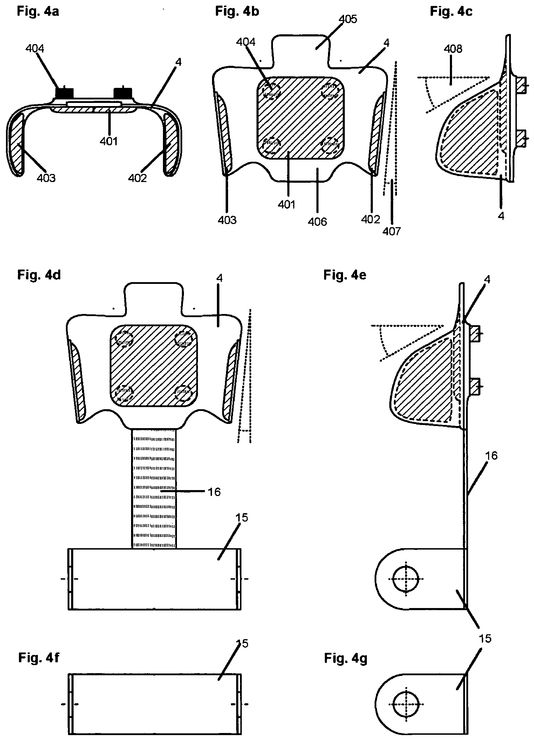

Von den drei Ausführungsformen der Figuren 3a bis 3c hat die in Figur 3a gezeigte ein erfindungsgemässes Beinteil (2) mit Aussparung am Gesäss (3b), Aussparung an der Kniekehle (13) und Polsterung beidseitig seitlich am Knie (12) und unten hinter der Kniekehle (14). Die Figur 3b zeigt ein weitgehend ähnliches Beinteil (2) wie das von Figur 3a, jedoch mit Sitzfläche (3a); und das Beinteil (2) der Figur 3c ist bis auf das Fehlen der Polsterung und der Ausstattung mit aussenseitigen distalen und proximalen Figur 4a zeigt eine erfindungsgemässe Rückenstütze (4) mit rückenseitiger Fläche, linker- und rechter Stützfläche sowie hinterem (401), linkem (402) und rechtem (403) Polster und Verbindungselementen zum Fahrzeug (404). Die Ausführungsform der Figur 4b zeigt die Vorderansicht einer erfindungsgemässen Rückenstütze (4) mit rückenseitiger Fläche, linker-, und rechter Stützfläche sowie hinterem (401), linkem (402) und rechtem (403) Polster, sowie einem oberen (405)- und unteren Fortsatz (406) sowie einer trapezförmigen Taillierung (407).
Wie in Figur 4c gezeigt, kann die erfindungsgemässe Rückenstütze (4) eine nach unten abfallende Seitefläche aufweisen. Die Figur 4d zeigt eine erfindungsgemässe Rückenstütze (4) von vorn mit einem Verbindungselement (15), das die beiden Beinteile über das Verbindungselement (16) dem Rückenteil (4) zuordnet.
Figur 4e zeigt das Rückenteil (4) mit den Verbindungselementen (16) und (15) von der Seite; Figuren 4f und 4g zeigen jeweils eine Vorder- und Seitenansicht eines Verbindungselements (15) für die der beiden Beinteile.

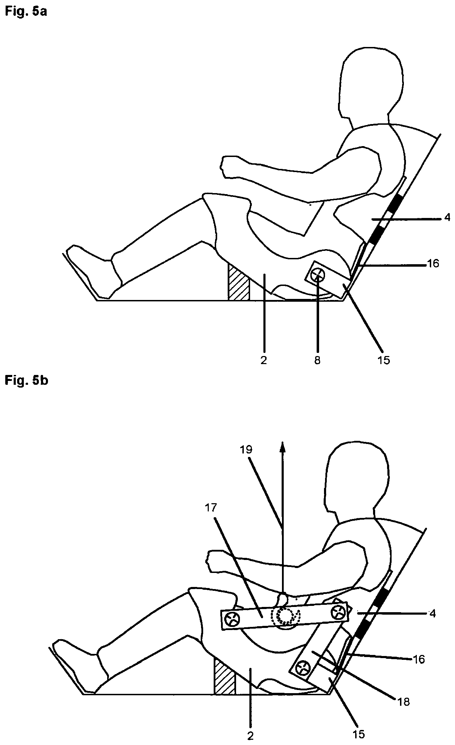

In Figur 5a wird im Kontext einer erfindungsgemässen Sitzvorrichtung ein Verbindungselement (15) für die Fixierung der beiden Beinteile (2) am Aufnahmepunkt (8) der Beinteile und das Verbindungselement (16) zur Verbindung derBeinteile (2) mit dem Rückenteil (4) gezeigt.
Figur 5b zeigt die Sitzvorrichtung der Figur 5a als Bestandteil eines Fahrzeugsitzextraktionssystems mit der Extraktionsvorrichtung (19), bestehend aus Fixierungsteilelement (18), das die Seitenflächen des Rückenteils (4) mit dem proximalen Bereich der Beinteile (2) verbindet und dem Verbindungsteilelement (17), das die Seitenflächen des Rückenteils (4) mit distalen Teil der Beinteile (2) verbindet und diese Anordnung räumlich fixiert und so die Bergung der Person in fixierter Haltung mittels gestattet.

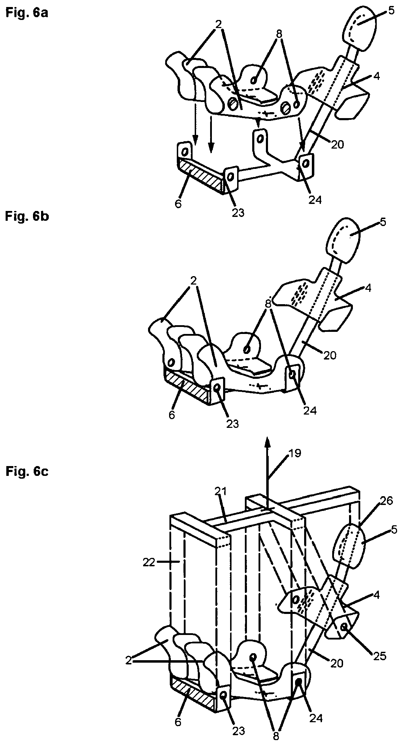

Figur 6a zeigt eine 3-D Ansicht eines bevorzugten Extraktionsrahmens (20) mit Kopfstütze (5), einem Rückenteil (4), einem Dämpfungsstützelement (6) und Aufnahmen (23) und (24) für die Beinteile (2) mit Aufnahme (8).
Figur 6b zeigt den Extraktionsrahmen (20) von Figur 6a mit eingesetzten und fixierten Beinteilen (2), die über die Aufnahmen (23) und (24) des Extraktionsrahmens (20) mit diesem verbunden sind, die an ihrem distalen Ende auf dem Dämpfungsstützelement (6) aufliegen.
Figur 6c zeigt ein Fahrzeugsitzextraktionssystem mit Fahrzeugsitz und Extraktionsvorrichtung (19) mit Extraktionsrahmen (20), bei der die Quer- und Tragestrebe (21) der Extraktionsvorichtung (19) über mehrere Verbindungselemente (22) mit den Aufnahmen (23, 24) am Sitzrahmen (20) sowie der Aufnahme (25) am Rückenteil (4) und der Aufnahme (26) am Kopfteil (5) verbunden ist.

Sämtliche vorab beschriebenen Merkmale der Beinteile, Sitzvorrichtungen, der Fahrzeugsitzextraktionssysteme sowie der Rückenstützen können gegebenenfalls in Bezug auf die Figuren 1 bis 6 zu weiteren Teilaspekten der Erfindung kombiniert werden. Ferner können sämtliche Teilaspekte eigenständige Erfindungen darstellen.

### BEZUGSZEICHEN

- 1: Sitzvorrichtung
- 2: Beinteil
- 3a: Sitzfläche
- 3b: Gesässaussparung
- 4: Rückenstütze
- 401: Polster/ Informationsteil Rückenseite
- 402: Polster/ Informationsteil linke Seite
- 403: Polster/ Informationsteil rechte Seite
- 404: Verbindungsteil zu Fahrzeug
- 405: Oberer Fortsatz Wirbelsäule
- 406: Unterer Fortsatz Wirbelsäule
- 407: Taillierungswinkel Rückenstütze
- 408: Winkel für Aussparung Ellbogenfreiheit
- 5: Kopfstütze
- 201: Beinteil proximal (Hüfte)
- 202: Beinteil distal (Knie)
- 6: Elastiktütze
- 7: Boden der Fahrgastzelle
- 8: Seitliche Aufnahme
- 8a: Schockabsorbierendes Element in Aufnahme
- 9: Schockabsorbierende Elemente
- 10a: Arretierungshebel offen
- 10b: Sicherungshebel
- 10c: Arretierungshebel
- 11: Bodengruppe
- 12: Kniepolster
- 13: Knieaussparung
- 14: Distale Polsterung
- 15: Verbindungselement Beinteile
- 16: Verbindungselement Rückenstütze-Verbindungselement (15)
- 17: Verbindungselement der Seitenflächen der Rückenteile (4) mit den distalen Beinteilen (2)
- 18: Verbindungselement der Seitenflächen der Rückenteile (3) mit den proximalen Beinteilen
- 19: Extraktionsvorrichtung
- 20: Sitzrahmen
- 21: Quer- und Tragestrebe der Extraktionsvorichtung (19)
- 22: Verbindungselement von der Strebe (21) zum Sitzrahmen (20)
- 23: Aufnahme für Extraktionsvorrichtung distal
- 24: Aufnahme für Extraktionsvorrichtung an den Seitenflächen des Rückenteils
- 25: Aufnahme für Extraktionsvorrichtung am Kopfteil

## Patentansprüche

1. Einer Sitzvorrichtung (1) zuordenbares formstabiles Beinteil (2), das jeweils einem linken oder rechten Oberschenkel (3) einer Person vom Knie bis zur Hüfte und an die Oberschenkelform eng anliegend zugeordnet werden kann wobei das Beinteil (2a, 2b) an der Hüfte aussenseitig, an dem Oberschenkel wenigstens am distalen Ende unterseitig und an dem Knie wenigstens innen- und aussenseitig flächig anliegen kann, **dadurch gekennzeichnet, dass** das Beinteil mit der Person derart verbunden werden kann, dass das Beinteil von der Person im von der Sitzvorrichtung gelösten Zustand als Bekleidungsstück getragen werden kann.

2. Beinteil nach dem vorhergehenden Anspruch, dadurch gekenntzeichnet, dass das Beinteil wenigstens eine Arretiervorrichtung seitlich und/oder unterseitig an dem proximalen Ende (Hüfte) sowie optional seitlich und/oder unterseitig entlang des Oberschenkels bis zum Knie zur fixier- und wieder lösbaren Verbindung mit einer Fahrzeugsitzvorrichtung und/oder einer Fahrgastzelle aufweist.

3. Beinteil nach einem der vorhergehenden Ansprüche, **dadurch gekennzeichnet, dass** es innenseitig gar nicht oder nur gering gepolstert und vorzugsweise glatt ist.

4. Beinteil nach einem der vorhergehenden Ansprüche, **dadurch gekennzeichnet, dass** es an dem Knie oberseitig wenigstens teilweise oder vollstandig anliegen kann.

5. Beinteil nach einem der vorhergehenden Ansprüche, **dadurch gekennzeichnet, dass** es wenigstens teilweise luftdurchlässig, vorzugsweise gelocht ist.

6. Beinteil nach einem der vorhergehenden Ansprüche, **dadurch gekennzeichnet, dass** es aussenseitig mit schockabsorbierenden Elementen versehen ist, vorzugsweise wenigstens an den proximalen und distalen Enden.

7. Beinteil nach einem der vorhergehenden Ansprüche, **dadurch gekennzeichnet, dass** es das Gesäss der tragenden Person ausspart.

8. Beinteil nach einem der vorhergehenden Ansprüche, **dadurch gekennzeichnet, dass** es am distalen Ende, vorzugsweise am Knie, vorzugsweise innenseitig, aussenseitig und/oder unterseitig am Knie, mit Sensoren ausgestattet ist.

9. Miteinander am proximalen Ende (Hüfte) gelenkig, vorzugsweise flexibel miteinander verbundene linke und rechte Beinteil nach einem der vorhergehenden Ansprüche.

10. Fahrzeugsitzvorrichtung (1) zum Lagern einer sitzenden Person (2) mit linken und rechten Beinteilen (2a, 2b) nach einem der vorhergehenden Ansprüche.

11. Fahrzeugsitzvorrichtung (1) nach Anspruch 10, **dadurch gekennzeichnet, dass** die Beinteile (2a, 2b) der Fahrzeugsitzvorrichtung (1) derart zugeordnet sind, dass der Oberschenkel (3) der sitzenden Person relativ zur Horizontalen (4) wenigstens einen Winkel von 10 bis 60, vorzugsweise 20 bis 40, mehr bevorzugt von 25 bis 35, am meisten bevorzugt von etwa 30 Grad aufweist.

12. Fahrzeugsitzvorrichtung nach einem der vorhergehenden Ansprüche, **dadurch gekennzeichnet, dass** die Beinteile aussenseitig und proximal einer Fahrzeugkabine und/oder einer Sitzplatte des Fahrzeugsitzes arretierbar zuordenbar sind.

13. Fahrzeugsitzvorrichtung nach einem der vorhergehenden Ansprüche, **dadurch gekennzeichnet, dass** der Winkel der Beinteile relativ zur Horizontalen einstellbar ist.

14. Fahrzeugsitzvorrichtung nach einem der vorhergehenden Ansprüche, **dadurch gekennzeichnet, dass** die Sitzvorrichtung zusätzlich wenigstens eine Sitzfläche, eine Rückenstütze, eine Hüftstütze und/oder eine Kopfstütze umfasst.

15. Fahrzeugsitzvorrichtung nach einem der vorhergehenden Ansprüche, **dadurch gekennzeichnet, dass** die Rückenstütze ausser am Rücken lediglich seitlich am Brustkorb unterhalb der Schultergelenke anliegt.

16. Fahrzeugsitzvorrichtung nach einem der vorhergehenden Ansprüche, **dadurch gekennzeichnet, dass** die Beinteile der Sitzvorrichtung und/oder einer Fahrzeugkabine so beweglich zugeordnet sind, dass vorzugsweise wenigstens eine beschränkte Seitwärtsauslenkung der Knie möglich ist.

17. Fahrzeugsitzvorrichtung nach einem der vorhergehenden Ansprüche, **dadurch gekennzeichnet, dass** die Beinteile wenigstens teilweise elastisch dämpfend dem Fahrzeugsitz und/oder der Fahrzeugkabine zugeordnet sind.

18. Fahrzeugsitzvorrichtung nach einem der vorhergehenden Ansprüche, **dadurch gekennzeichnet, dass** die Beinteile einem oder mehreren anderen Teilen der Sitzvorrichtung, vorzugsweise einen Sitzteil und/oder einem Rückenteil so zugeordnet sind oder zugeordnet werden können, dass diese Teile den Körper der sitzenden Person auch nach dem Lösen vom Fahrzeug stützen.

19. Fahrzeugsitzextraktionssystem bestehend aus einer Fahrzeugsitzvorrichtung nach einem der vorangegangenen Ansprüche und einer Extraktionsvorrichtung, **dadurch gekennzeichnet, dass** die Fahrzeugsitzvorrichtung Aufnahmepunkte für die Extraktionsvorrichtung aufweist, mit der wenigstens Teile der Sitzvorrichtung gemeinsam und vorzugsweise in räumlich fixierter Zuordnung zueinander aus der Fahrzeugkabine geborgen werden können.

## Claims

1. A dimensionally stable leg part (2) that can be allocated to a seat device (1), which can be allocated to a left or right upper leg (3), respectively, of a person from the knee to the hip and in tight contact with the upper leg's form, wherein the leg part (2a, 2b) can contact flat on the outside of the hip, on the underside of the upper leg at least on the underside of the distal end, and at least inside and outside of the knee, **characterized in that** the leg part can be connected to the person in such a way that the leg part can be worn as an article of clothing by the person in the unfastened state from the seat device.

2. Leg part according to the preceding claim, **characterized in that** the leg part has at least one locking device on the side and/or underneath at the proximal end (hip) as well as optionally on the side and/or underneath along the upper leg up to the knee for the fixable and then detachable connection to a vehicle seat and/or a passenger compartment.

3. Leg part according to one of the preceding claims, **characterized in that** on the inside it is not padded at all or only slightly padded, preferably it is smooth.

4. Leg part according to one of the preceding claims, **characterized in that** it can at least partially or completely contact the knee on the upper side.

5. Leg part according to one of the preceding claims, **characterized in that** it is at least partially air permeable, preferably perforated.

6. Leg part according to one of the preceding claims, **characterized in that** it has shock-absorbing elements on the outside, preferably at least on the proximal and distal ends.

7. Leg part according to one of the preceding claims, **characterized in that** it leaves out the buttocks of the person wearing it.

8. Leg part according to one of the preceding claims, **characterized in that** it is equipped with sensors at the distal end, preferably at the knee, preferably on the inside, outside and/or underside of the knee.

9. Left and right leg part according to one of the preceding claims that are articulately, preferably flexibly, connected to each other at the proximal end (hip).

10. Vehicle seat device (1) for supporting a seated person (2) with left and right leg parts (2a, 2b) according to one of the preceding claims.

11. Vehicle seat device (1) according to claim 10, **characterized in that** the leg parts (2a, 2b) of the vehicle seat device (1) are allocated such that the upper leg (3) of the seated person has an angle of at least 10 to 60, preferably 20 to 40, more preferably from 25 to 35, most preferably of about 30 degrees relative to the horizontal (4).

12. Vehicle seat device according to one of the preceding claims, **characterized in that** the leg parts are lockably allocatable on the outside and proximal to a vehicle cabin and/or a seat plate of the vehicle seat.

13. Vehicle seat device according to one of the preceding claims, **characterized in that** the angle of the leg parts is adjustable relative to the horizontal.

14. Vehicle seat device according to one of the preceding claims, **characterized in that** the seat device additionally comprises at least one seat, a backrest, a hip support and/or a headrest.

15. Vehicle seat device according to one of the preceding claims, **characterized in that** the backrest, except at the back, only contacts the chest on the side below the shoulder joints.

16. Vehicle seat device according to one of the preceding claims, **characterized in that** the leg parts are movably allocated to the seat device and/or of a vehicle cabin such that preferably at least one limited sideways deflection of the knee is possible.

17. Vehicle seat device according to one of the preceding claims, **characterized in that** the leg parts are at least partially elastically dampingly allocated to the vehicle seat and/or the vehicle cabin.

18. Vehicle seat device according to one of the preceding claims, **characterized in that** the leg parts are or can be allocated to one or more other parts of the seat device, preferably a seat part and/or a back part, such that these parts also support the body of the seated person after removal from the vehicle.

19. Vehicle seat extraction system consisting of a vehicle seat device according to one of the preceding claims and an extraction device, **characterized in that** the vehicle seat device has mounting points for the extraction device, by which at least parts of the seat device can be recovered from the vehicle cabin together and preferably in spatially fixed allocation to one another.

## Revendications

1. Élément pour jambe (2) indéformable pouvant être associé à un dispositif de siège (1), qui peut être associé respectivement à une cuisse (3) gauche ou droite d'une personne, du genou jusqu'à la hanche, en épousant la forme de la cuisse, l'élément pour jambe (2a, 2b) pouvant être en contact plan avec la hanche, sur le côté extérieur, avec la cuisse au moins au niveau de l'extrémité distale, sur le côté inférieur, et avec le genou au moins sur le côté intérieur et le côté extérieur, **caractérisé par le fait que** l'élément pour jambe peut être relié à la personne de manière à ce que l'élément pour jambe puisse être porté, à l'état détaché du dispositif de siège, comme un article d'habillement par la personne.

2. Élément pour jambe selon la revendication précédente, **caractérisé par le fait que** l'élément pour jambe comporte au moins un dispositif de blocage, latéralement et/ou sur le côté inférieur, au niveau de l'extrémité proximale (hanche) et, facultativement, latéralement et/ou sur le côté inférieur le long de la cuisse jusqu'au genou, en vue d'une liaison de fixation et détachable avec un dispositif de siège de véhicule et/ou un compartiment passager.

3. Élément pour jambe selon l'une des revendications précédentes, **caractérisé par le fait qu'**il n'est pas du tout rembourré, ou seulement très peu, sur le côté intérieur et est de préférence lisse.

4. Élément pour jambe selon l'une des revendications précédentes, **caractérisé par le fait qu'**il peut être en contact avec le genou, sur le côté supérieur, au moins partiellement ou complètement.

5. Élément pour jambe selon l'une des revendications précédentes, **caractérisé par le fait qu'**il est au moins en partie perméable à l'air, de préférence perforé.

6. Élément pour jambe selon l'une des revendications précédentes, **caractérisé par le fait qu'**il est pourvu, sur le côté extérieur, d'éléments absorbant les chocs, de préférence au moins au niveau des extrémités proximale et distale.

7. Élément pour jambe selon l'une des revendications précédentes, **caractérisé par le fait qu'**il laisse libre la région fessière de la personne qui le porte.

8. Élément pour jambe selon l'une des revendications précédentes, **caractérisé par le fait qu'**il est muni de capteurs au niveau de l'extrémité distale, de préférence au niveau du genou, de préférence sur le côté intérieur, sur le côté extérieur et/ou sur le côté inférieur au niveau du genou.

9. Éléments pour jambe gauche et droit selon l'une des revendications précédentes reliés l'un à l'autre de manière articulée, de préférence de manière flexible, au niveau de l'extrémité proximale (hanche).

10. Dispositif de siège de véhicule (1) pour installer une personne assise (2) avec des éléments pour jambe gauche et droit (2a, 2b) selon l'une des revendications précédentes.

11. Dispositif de siège de véhicule (1) selon la revendication 10, **caractérisé par le fait que** les éléments pour jambe (2a, 2b) sont associés au dispositif de siège de véhicule (1) de façon que la cuisse (3) de la personne assise forme au moins un angle de 10° à 60°, de préférence de 20° à 40°, plus préférablement de 25° à 35°, le plus préférablement d'environ 30°, par rapport à l'horizontale (4).

12. Dispositif de siège de véhicule selon l'une des revendications précédentes, **caractérisé par le fait que** les éléments pour jambe peuvent être associés à une cabine de véhicule et/ou une plaque d'assise du siège de véhicule, d'une manière permettant un blocage, sur le côté extérieur et proximal de celles-ci.

13. Dispositif de siège de véhicule selon l'une des revendications précédentes, **caractérisé par le fait que** l'angle des éléments pour jambe par rapport à l'horizontale est réglable.

14. Dispositif de siège de véhicule selon l'une des revendications précédentes, **caractérisé par le fait que** le dispositif de siège comprend, en plus, au moins une surface d'assise, un appui dorsal, un appui de hanche et/ou un appui-tête.

15. Dispositif de siège de véhicule selon l'une des revendications précédentes, **caractérisé par le fait que** l'appui dorsal n'est en contact, à l'exception du dos, qu'avec la cage thoracique, sur les côtés, sous l'articulation de l'épaule.

16. Dispositif de siège de véhicule selon l'une des revendications précédentes, **caractérisé par le fait que** les éléments pour jambe sont associés de manière mobile au dispositif de siège et/ou à une cabine de véhicule, de façon que, de préférence, au moins une déviation latérale limitée du genou soit possible.

17. Dispositif de siège de véhicule selon l'une des revendications précédentes, **caractérisé en ce que** les éléments pour jambe sont associés au siège de véhicule et/ou à la cabine de véhicule au moins en partie d'une manière élastiquement amortissante.

18. Dispositif de siège de véhicule selon l'une des revendications précédentes, **caractérisé par le fait que** les éléments pour jambe sont associés ou peuvent être associés à une ou plusieurs autres parties du dispositif de siège, de préférence une partie de siège et/ou une partie dorsale, de façon que ces parties soutiennent le corps de la personne assise même après la désolidarisation d'avec le véhicule.

19. Système d'extraction de siège de véhicule constitué d'un dispositif de siège de véhicule selon l'une des revendications précédentes et d'un dispositif d'extraction, **caractérisé par le fait que** le dispositif de siège de véhicule comporte des points de réception pour le dispositif d'extraction grâce auquel au moins des parties du dispositif de siège peuvent être sorties de la cabine de véhicule, ensemble et, de préférence, fixement agencées les unes par rapport aux autres dans l'espace.
